(19) Europäisches Patentamt
European Patent Office
Office européen des brevets

(11) **EP 3 799 582 B1**

(12) **EUROPEAN PATENT SPECIFICATION**

(45) Date of publication and mention of the grant of the patent:
**05.01.2022 Bulletin 2022/01**

(51) Int Cl.:
**G01H 1/06** (2006.01)   **B25F 5/00** (2006.01)

(21) Application number: **19773143.3**

(86) International application number:
**PCT/GB2019/052322**

(22) Date of filing: **19.08.2019**

(87) International publication number:
**WO 2020/039175 (27.02.2020 Gazette 2020/09)**

(54) **VIBRATION MONITORS**

VIBRATIONSÜBERWACHUNG

DISPOSITIFS DE SURVEILLANCE DE VIBRATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2018 GB 201813492**

(43) Date of publication of application:
**07.04.2021 Bulletin 2021/14**

(73) Proprietor: **Reactec Limited**
**Edinburgh, Lothian EH11 4DF (GB)**

(72) Inventors:
• **ANDERSON, Leif**
  **Edinburgh, Lothian EH11 4DF (GB)**
• **MCLAUGHLIN, Jacqueline**
  **Edinburgh, Lothian EH11 4DF (GB)**

(74) Representative: **Peter, Kenneth William**
**K. W. Peter & Co.**
**Centre Cottage, Bush House Cottages**
**Edinburgh Technopole**
**Milton Bridge**
**Edinburgh, Midlothian EH26 0BA (GB)**

(56) References cited:
EP-A1- 2 083 252   DE-A1-102007 010 800
GB-A- 2 411 472   GB-A- 2 542 027
US-A1- 2014 176 422

EP 3 799 582 B1

## Description

<u>Field of the Invention</u>

The present invention relates to a vibration monitor configured to be attached to the body of an operator during use of a power tool and more specifically but not exclusively a vibration monitor configured to be attached to an arm or hand of the operator during use of a power tool.

<u>Background Art</u>

Hand held and hand guided powers tools usually transmit vibration to the hands and arms of a power tool operator. It is known that such transmitted vibration, which is often termed Hand Arm Vibration (HAV), can lead to painful and disabling disease, such as white finger, as a consequence of long-term exposure.

Vibration monitors for monitoring vibration sustained during use of power tools are known. GB 2299168 discloses a vibration monitor that is worn on the wrist of an operator during use of vibrating apparatus. The vibration monitor of GB 2299168 senses vibration and determines the duration of vibration that exceeds a threshold level. GB 2542027 discloses a wrist worn vibration monitor. The wrist worn vibration monitor of GB 2542027 senses vibration and applies a transformation to the sensed vibration to provide transformed data that is as a consequence more representative of vibration at a location on a power tool or a workpiece with which the operator is in contact during use of the power tool.

DE 10 2007 010 800 A1 discloses a vibration monitor comprising a vibration sensor and a processor. The vibration sensor senses in first, second and third axes vibration sustained by the arm or hand of an operator of a power tool. The processor applies transformations to vibration signals from the vibration sensor to determine vibration exposure for the operator. US 2014/176422 A1 discloses a biometric monitoring device which turns a display of the biometric monitoring device on and displays the time in response to sensors of the biometric monitoring device detecting motion of the forearm of the wearer of the biometric monitoring device consistent with moving the forearm into a watch-viewing position.

The present inventors have recognised the approaches of GB 2299168 and GB 2542027 to vibration exposure monitoring to have shortcomings. The present invention has been devised in light of the inventors' appreciation of such shortcomings. It is therefore an object for the present invention to provide an improved vibration monitor which is configured to be releasably attached to an arm or hand of an operator during use of a power tool.

<u>Statement of Invention</u>

The present invention provides a vibration monitor according to claim 1 and a method of monitoring vibration according to claim 15. Embodiments are defined in dependent claims.

The vibration monitor is configured to be releasably attached to an arm or hand of an operator during use of a power tool. The vibration monitor comprises a vibration sensor operative to sense vibration sustained by the arm or hand of the operator when the vibration monitor is attached to the arm or hand of the operator. When the vibration monitor is attached to the arm or hand, the vibration sensor provides a first vibration signal corresponding to vibration in a first axis, a second vibration signal corresponding to vibration in a second axis, and a third vibration signal corresponding to vibration in a third axis. The first axis extends between the dorsal and palmar sides of the hand or arm and more specifically of the lower arm. The second axis extends across the arm or hand in a direction of separation of fingers of the hand. The third axis extends along the arm or hand. The first, second and third axes may be substantially mutually orthogonal.

The vibration monitor also comprises a processor configured, e.g. programmed, to receive the first, second and third vibration signals, to apply a first transformation to the first vibration signal, to apply a second transformation to the second vibration signal, and to apply a third transformation to the third vibration signal. The processor is further configured, e.g. programmed, to determine vibration exposure for the operator during use of the power tool with the vibration exposure being determined in dependence on the first, second and third vibration signals as transformed by the first, second and third transformations.

Each of the first to third transformations provides in respect of a respective one of the first to third vibration signals for: a rise to a peak between 8 Hz and 20 Hz as frequency increases; a fall to a trough beyond the peak with increasing frequency; and a rise from the trough with further increasing frequency. Furthermore, the third transformation provides for a rise from the trough at a higher frequency, and more specifically a frequency higher by at least 20 Hz, than at least one of the first and second transformations. A trough may comprise a maximum attenuation value and a deviation from the maximum attenuation value of no more than 20%, 15%, 10% or 5% of the maximum attenuation value. A deviation may be present between sides of the trough.

The present inventors became appreciative of the differing contributions of the anatomy of the hand and arm along the first to third axes in respect of transmission of vibration through the hand and arm from the location on a power tool or a workpiece with which the operator is in contact during use of the power tool. Further to this, the present inventors recognised that determination of vibration exposure could be improved by processing of vibration sensed in at least two of the three axes differently. More specifically, the different processing comprises applying a third transformation to the third vibration signal with the third transformation differing from the transformation applied to at least one of the first and second vibration signals. More specifically, the third transformation provides for a rise from a trough at a higher frequency than at least one of the first and second transformations, the trough in the transformations being at a higher frequency than a peak between 8 Hz and 20 Hz. The rise from the trough by the third transformation at a higher frequency reflects the different anatomical structure along the third axis compared with along the first and second axes. Along the first and second axes, the anatomical structure is comprised of softer structures, such as fat and cartilage and, and is more loosely coupled by way of interconnecting tissue, than along the third axis. Transmission of vibration in the first and second axes may be similar to the extent that they may be treated as being the same whereby the first and second transformations may be the same. The same transformation may therefore be applied to each of vibration in the first axis and vibration in the second axis. Where transmission of vibration differs from the first axis to the second axis, first and second transformations may be applied to the first and second vibration signals respectively, the first and second transformations being different from each other.

According to a first approach, the first transformation may be applied to the first vibration signal to provide first transformed data, the second transformation may be applied to the second vibration signal to provide second transformed data and the third transformation may be applied to the third vibration signal to provide third transformed data. As described further below, the first to third transformed data may be combined to determine vibration exposure.

According to a second approach, the first to third transformations may be combined to provide a combined transformation and the first to third vibration signals may be combined to provide a combined vibration signal. Furthermore, the combined transformation may be applied to the combined vibration signal to provide combined transformed data. Vibration exposure may be determined in dependence on the combined transformed data.

At least one of the first and second transformations may provide for the rise from the trough, and more specifically a rise from a base of the trough, with further increasing frequency starting below a frequency of 50 Hz, 60 Hz, 70 Hz or 80 Hz. The third transformation may provide for the rise from the base of the trough with further increasing frequency starting above a frequency of 80 Hz, 90 Hz, 100 Hz, 110 Hz, 120 Hz, 130 Hz, 140 Hz, 150 Hz, 160 Hz, 170 Hz or 175 Hz. Different behaviour of the third transformation from at least one of the first and second transformations in respect of the third transformation having a rise from the trough at higher frequency reflects the present inventors' deeper appreciation of the differing contributions of the anatomy of the hand and arm along the first to third axes in respect of transmission of vibration through the hand and arm.

The third transformation may provide for a reaching the trough and more specifically reaching a base of the trough, at a higher frequency than at least one of the first and second transformations. At least one of the first and second transformations may provide for reaching the trough below 30 Hz. In addition, the third transformation may provide for reaching the trough between 30 Hz and 100 Hz. The third transformation may provide for reaching the trough between 40 Hz and 100 Hz, between 50 Hz and 100 Hz, between 60 Hz and 100 Hz, between 70 Hz and 100 Hz, or between 80 Hz and 100 Hz. Different behaviour of the third transformation from at least one of the first and second transformations in respect of the third transformation reaching the base of the trough at higher frequency reflects the present inventors' deeper appreciation of the differing contributions of the anatomy of the hand and arm along the first to third axes in respect of transmission of vibration through the hand and arm. Further to this, the present inventors have appreciated that in a frequency band containing the peaks of the first to third transformations, the third transformation may be shifted to higher frequency than at least one of the first and second transformations to take account of the differing contributions of the anatomy of the hand and arm along the first to third axes.

The peak between 8 Hz and 30 Hz may be constituted by one of a transition from increasing amplification to reducing amplification and a transition from reducing attenuation to increasing attenuation. The trough may be constituted by one of a transition from increasing attenuation to reducing attenuation and a transition from reducing amplification to increasing amplification.

Each of the first to third transformations may transition from maximum attenuation to reducing attenuation with increasing frequency and at a frequency below 150 Hz, 125 Hz or 100 Hz. The transition from increasing attenuation to reducing attenuation defines part of the trough in each of the first to third transformations. The trough in the first transformation may be less deep than the trough in each of the second and third transformations. The trough in the third transformation may be deeper than the trough in the second transformation. The trough in the first transformation being less deep than the trough in each of the second and third transformations and the trough in the third transformation being deeper than the trough in the second transformation reflects the present inventors' appreciation at a finer level of differing contributions of the anatomy of the hand and arm along the first to third axes.

The trough provided by the first transformation may be of maximum attenuation level below 50 Hz. An attenuation factor in a band of maximum attenuation may be between 0.3 and 0.5 or between 0.35 and 0.45. With further increasing frequency, the first transformation may provide for reducing attenuation before changing from providing reducing attenuation to providing increasing amplification at a frequency below 120 Hz. The first transformation may provide for reducing attenuation before changing from providing reducing attenuation to providing increasing amplification at a frequency below 115 Hz, 110 Hz, 105 Hz or 100 Hz. The first transformation may provide for reducing attenuation before changing from providing reducing attenuation to providing increasing amplification at a frequency above 80 Hz, 85, Hz, 90 Hz, 95 Hz, 100 Hz, 105 Hz, 110 Hz or 115 Hz.

The trough provided by the second transformation may be of maximum attenuation level below 50 Hz. The attenuation level reached by the second transformation below 50 Hz may be up to half the attenuation level reached by the first transformation below 50 Hz. An attenuation factor in a band of maximum attenuation for the second transformation may be between 0.15 and 0.4 or between 0.2 and 0.3. With further increasing frequency, the second transformation may provide for reducing attenuation before changing from providing reducing attenuation to providing increasing amplification at a frequency below 150 Hz. The second transformation may provide for reducing attenuation before changing from providing reducing attenuation to providing increasing amplification at a frequency below 140 Hz, 135 Hz, 130 Hz or 125 Hz. The second transformation may provide for reducing attenuation before changing from providing reducing attenuation to providing increasing amplification at a frequency above 110 Hz, 115 Hz, 120 Hz, 125 Hz, 130 Hz, 135 Hz or 140 Hz.

The trough provided by the third transformation may be of maximum attenuation level below 150 Hz. An attenuation factor in a band of maximum attenuation for the third transformation may be between 0.15 and 0.35 or between 0. 2 and 0.3. With further increasing frequency, the third transformation may provide for reducing attenuation before changing from providing reducing attenuation to providing increasing amplification at a frequency below 250 Hz. The third transformation may provide for reducing attenuation before changing from providing reducing attenuation to providing increasing amplification at a frequency below 230 Hz, 210 Hz, 190 Hz or 180 Hz. The third transformation may provide for reducing attenuation before changing from providing reducing attenuation to providing increasing amplification at a frequency above 160 Hz, 170 Hz, 180 Hz, 190 Hz, 210 Hz or 230 Hz. The rate of decrease in attenuation of the third transformation may therefore be significantly less than the rate of decrease in attenuation of each of the first and second transformations.

Each of the first to third transformations may reach maximum amplification with increasing frequency between 120 Hz and 300 Hz. More specifically, each of the first to third transformations may reach maximum amplification between 130 Hz and 295 Hz, between 140 Hz and 290 Hz, between 150 Hz and 285 Hz, between 160 Hz and 280 Hz, or between 170 Hz and 275 Hz. Each of the first to third transformations may reach maximum amplification in the form of a second peak, i.e. a peak at higher frequency than the peak between 8 Hz and 20 Hz. Each of the first to third transformations may rise to the second peak from the trough. The transformations may start falling from their respective second peak between 100 Hz and 200 Hz.

As described above, each of the first to third transformations provides a peak between 8 Hz and 20 Hz. The first and second transformations may have a peak value between 8 Hz and 20 Hz within 1 Hz, 0.5 Hz or 0.25 Hz of each other and more specifically at the same frequency. The peak value of the third transformation between 8 Hz and 20 Hz may be at a higher frequency than the peak value of at least one of the first and second transformations. The peak value of the third transformation between 8 Hz and 20 Hz may be at a frequency no more than 5 Hz, 4 Hz, 3 Hz or 2 Hz higher than the peak value of at least one of the first and second transformations. The peak value of the third transformation between 8 Hz and 20 Hz may be at a frequency more than 1 Hz, 2 Hz, 3 Hz or 4 Hz higher than the peak value of at least one of the first and second transformations. The peak values for the first and second transformations may be within 20%, 10%, 5%, 2% or 1% of each other and more specifically may be the same. The present inventors have found that the anatomical structure for a group of subjects may be such that attenuation of transmitted vibration at a specific frequency may differ for the third axis from at least one of the first and second axes. Therefore, a height of the peak for at least one of the first and second transformations may up to 10%, 20% or 30% lower than a height of the peak for the third transformation. The peak value for at least one of the first and second transformations may be between 0.45 and 1.2, between 0.6 and 0.9, between 0.65 and 0.8, or between 0.7 and 0.75. The peak value for the first transformation may be between 0.65 and 1.8, between 0.85 and 1.35, between 0.95 and 1.2, or between 1.0 and 1.1. The peak value for the third transformation may be more than one to thereby provide for amplification. The peak value for each of the first and second transformations may be less than one to thereby provide for attenuation.

Each of the first to third transformations may increase to the peak between 8 Hz and 20 Hz from an infinite attenuation factor, i.e. a zero amplification value, from a frequency no higher than 6 Hz. Each of the first to third transformations may increase to the peak without any intervening decrease. Respective parts of plots of attenuation/amplification against frequency defined by the first to third transformations and up to 10 Hz may be within 5%, 2% or 1% of each other and more specifically may be the same. Each of the first to third transformations may provide for at least one of attenuation and amplification up to at least 300 Hz, 400 Hz, 500 Hz, 600 Hz or 650 Hz.

At least one of the first to third transformations may have a first form for a low frequency power tool and a second form for a high frequency tool. The first and second forms of the transformation may be substantially the same below a threshold frequency and may differ from each other above the threshold frequency. The second form of the transformation may provide for greater amplification or less attenuation at the same respective frequencies as the first form of the transformation and above the threshold frequency. The threshold frequency may be between 90 Hz and 230 Hz and more specifically between 120 Hz and 200 Hz. A different threshold frequency may be applied to each of the first to third transformations. A first threshold frequency for the first transformation may be between 120 Hz and 180 Hz, between 130 Hz and 170 Hz, between 140 Hz and 160 Hz, or between 145 Hz and 155 Hz. A second threshold frequency for the second transformation may be between 90 Hz and 150 Hz, between 100 Hz and 140 Hz, between 110 Hz and 130 Hz, or between 115 Hz and 125 Hz. A third threshold frequency for the third transformation may be between 135 Hz and 195 Hz, between 145 Hz and 185 Hz, between 155 Hz and 175 Hz, or between 160 Hz and 170 Hz.

The processor may be configured to analyse at least one of the first to third vibration signals to determine if vibration from a high frequency tool is being sensed. Analysis of a vibration signal may comprise ascertaining a characteristic, such as a shape, of the vibration signal and more specifically a characteristic of the vibration signal within a predetermined frequency range, such as between 120 Hz and 200 Hz. Analysis may further comprise comparing the ascertained characteristic with a predetermined characteristic and selecting the second form of transformation, i.e. the high frequency tool transformation, in dependence on the comparison. For example, analysis may comprise ascertaining a height of a peak of the vibration signal within a predetermined frequency range, such as between 120 Hz and 200 Hz, and selecting the second form of transformation, i.e. the high frequency tool transformation, if the peak height is above a predetermined value. Analysis may comprise frequency domain analysis.

Alternatively or in addition, the form of the first to third transformations as to low or high frequency power tool may be selected in dependence on tool type data received by the vibration monitor. The tool type data may be input by a user, such as the operator. Input of the tool type data may be by way of user operation of a user interface or by way of an electrical input to the vibration monitor, such as may be accessed by an electrical connector.

Alternatively or in addition, the tool type data may be received from a tool device attached to the power tool. The tool type data may be received from the tool device by way of a wireless communication link between the vibration monitor and the tool device. The wireless communication link may be radio frequency, such as in according with RFID or Bluetooth. The tool device and the vibration monitor may be configured accordingly for wireless communication. The tool device may be configured to be attached to a power tool by way of adhesive or the like.

The processor may be configured, e.g. programmed, to transform time domain output from the vibration sensor to a frequency domain signal. Application of the first to third transformations or a combination thereof may be in the frequency domain.

The processor may be configured to perform a Fourier transform and more specifically an overlapping windowed Fourier transform, such as Welch's method. The processor may be operative to form plural frequency bands, the frequency bands being between 500 and 1300, between 700 and 1100 or between 800 and 1000. For example, there may be 896 frequency bands. The lower limit of the frequency bands may be 0 Hz, 1 Hz, 2 Hz, 3 Hz, 4 Hz, 5 Hz or 6 Hz. The upper limit of the frequency bands may be 500 Hz, 600 Hz, 700 800 Hz or 900 Hz. A Power Spectral Density (PSD) may be determined in dependence on the frequency domain signal. Furthermore, an energy value may be determined by integration over a predetermined interval. For example, the energy value may be determined in respect of the frequency range 0 Hz to 650 Hz.

Alternatively or in addition, the processor may be configured to apply the first, second and third transformations or a combination thereof in the time domain. Processing may be entirely in the time domain. Time domain processing may be appropriate where the processor is of sufficient capability.

Each of the first to third transformations may be determined by determining transmission of vibration through plural operators in respective first to third axes. More specifically, the transmission of vibration may be determined for different power tools with the first to third transformations being determined to represent the transmission for the different power tools. As described above, different transformations may be used at higher frequencies for separate categories of low frequency tools and high frequency tools. A transformation may be determined by taking a first measurement of vibration at or near a point of contact with the power tool or workpiece and by taking a second measurement of vibration at or near a location or intended location of the vibration monitor on an operator.

In an alternative approach, each of the first to third transformations may be determined for a particular operator. Determination for a particular operator may comprise providing an anatomical parameter for the particular operator, such as body mass index or width of wrist, or a parameter concerning how the particular operator grips the power tool or workpiece. The parameter concerning how the particular operator grips the power tool may be determined in dependence on a grip strength test. At least one of the first to third transformations may be configured in dependence on the provided anatomical parameter or parameter concerning how the particular operator grips the power tool or workpiece. The first to third transformations may thus be tailored to the particular operator.

Further to this, the first to third transformations may be formed on the basis of a group of operators with at least one of the resulting first to third transformations being tailored for the particular operator. A frequency difference between the rise from the trough of third transformation and the rise from the trough of at least one of the first and second transformations may depend on the operator with differences in operator anatomy providing for differences in transmission of vibration in the third axis in particular.

Transmission data obtained as described above may be combined with a weighting appropriate for HAV exposure determination to provide the first to third transformations. The weighting appropriate for HAV exposure determination may, for example, be as specified in Table A.2, Annex A EN ISO 5349:2001.

The processor may be configured, e.g. programmed, to determine at least one root mean square vibration value from the first to third transformed data or from the combined transformed data. The processor may be configured to provide a single value that represents amplitude of the vibration sensed in each of the first to third axes. The processor may be operative to determine the root mean square value for an axis in accordance with:

$$a_{hw} = \sqrt{\sum_i (W_{hi} a_{hi})^2}$$

where $a_{hw}$ is the root mean square acceleration for the axis, $W_{hi}$ is a weighting factor for the $i$ th one-third-octave band applied by way of a respective one of the first to third transformations and $a_{hi}$ is the acceleration for one of the first to third axes measured in the $i$ th one-third-octave band in metres per second squared. The weighting factor, $W_{hi}$, may comprise weighting appropriate for HAV exposure determ ination.

Furthermore, the processor may be configured to sum the root mean square values for the first to third axes. The processor may be configured to sum the square of vibration data for each of the three axes. More specifically the processor may be configured to determine the square root of the sum of the square of vibration data for each of the three axes. The processor may be configured to combine vibration data in the three axes in accordance with:

$$a_{hv} = \sqrt{a_{hwx}^2 + a_{hwy}^2 + a_{hwz}^2}$$

where $a_{hv}$ is the combined value for the three axes and $a_{hwx}$, $a_{hwy}$ and $a_{hwz}$ are the root mean square values for the first to third axes (i.e. x, y and z axes) respectively as determined in accordance with the equation above. The value obtained may be a vibration level value.

In certain circumstances, the present inventors have found that transmissibility changes with vibration magnitude at a given frequency whereby vibration of greater magnitude is more heavily attenuated by the anatomy than vibration of lesser magnitude. At least one of the first to third transformations or the combined transformation may be adjusted positively or negatively to take account of such change in transmissibility. More specifically, a transformation may be adjusted in dependence on the magnitude of a vibration signal. According to a first approach, the transformation may be adjusted by moving the transformation in the frequency axis. According to a second approach, all of the transformation may be adjusted, such as by changing all of the weighting factors described above. According to a third approach, a part of the transformation in a frequency band of greater magnitude may be adjusted whereas another part of the transformation may not be adjusted. For example, a positive or negative offset may be applied to the weighting factors described above in the frequency band or bands in which there is greater or lesser magnitude of vibration.

The processor may be operative to determine a vibration exposure in dependence on a period of exposure and the vibration level value determined as described above. The vibration exposure may be determined by multiplying the square of the vibration level value by the period of exposure. The vibration exposure may comprise a vibration score. The vibration score be $2 * T * V^2$, where T is the duration of exposure in hours and V is the vibration level value. The processor may be operative to record at least one vibration exposure. More specifically plural vibration exposures may be recorded by accumulating the plural vibration exposures determined, for example, during a predetermined time such as a day. A daily vibration exposure may be determined, for example in accordance with ISO 5349-1.

The processor may be operative to determine a time remaining for use of a power tool in dependence on the vibration level value and a vibration exposure limit, such as a vibration exposure limit in accordance with ISO 5349-1. The time remaining for use may be determined further in dependence on vibration level values determined during previous use of at least one power tool, such as the same power tool or a different power tool. For example, the vibration monitor may store an accumulated vibration exposure and upon start of use of a power tool, the vibration monitor may provide a time remaining for use of the power tool which takes into account the accumulated vibration exposure and the vibration exposure during use of the present power tool. The time remaining for use may be displayed to the operator, such as by way of a display comprised in the vibration monitor, or conveyed to a remote location whereby another party is apprised of the operator's present status vis-à-vis the time remaining for use. The processor may be operative to decrement the time remaining for use in dependence on ongoing determination of the vibration level value.

As described above, the vibration monitor is configured to be releasably attached to the arm or hand of the operator. The vibration monitor may be configured to be releasably attached to the wrist of the operator. The vibration monitor may have the form of a wristwatch. The vibration monitor may therefore comprise an attachment device, such as a strap or a band, whereby the vibration monitor may be attached to the arm and more specifically the wrist. The attachment device may be configured such that vibration is coupled properly to the vibration monitor and more specifically vibration in a relevant frequency band is coupled to the vibration monitor. The attachment device may be configured such that it is substantially inelastic when the vibration monitor is attached to the operator.

The vibration monitor may comprise a housing. The housing may contain the vibration sensor and the processor. The attachment device may be attached to an exterior of the housing. The housing may be formed at least in part of a substantially rigid material whereby vibration is coupled from the operator to the vibration sensor. The housing may be formed at least in part from a plastics material, such as PC-ABS.

The vibration monitor may be configured such that the attachment device, in use, orients the vibration monitor in relation to the arm or hand in a predetermined way. The vibration sensor may be disposed in the housing such that the first to third axes are oriented in relation to a palm of the hand of the operator when the vibration sensor is attached to the arm or hand of the operator. The attachment device may extend from a first side of the housing and perhaps from each of first and second oppositely directed sides of the housing. The vibration sensor may be disposed in the housing such that a first one of the first to third axes and the attachment device extend in the same direction. The vibration sensor may be disposed in the housing such that a second one of the first to third axes extends between a first surface of the housing comprising at least one of a display and an operator control, i.e. a surface facing way from the operator's arm or hand when in use, and an oppositely directed second surface. The vibration sensor may be disposed in the housing such that a third one of the first to third axes extends in a direction orthogonal to a direction of extension of the attachment device from the housing and orthogonal to a direction between the first and second surfaces. The vibration monitor may be configured to determine which of the first to third axes the first one is, which of the first to third axes the second one is, and which of the first to third axes the third one is.

Alternatively, the vibration sensor may be disposed in the housing such that the second axis and the attachment device extend in the same direction. Furthermore, the vibration sensor may be disposed in the housing such that the first axis extends between a first surface of the housing comprising at least one of a display and an operator control, i.e. a surface facing way from the operator's arm or hand when in use, and an oppositely directed second surface. Furthermore, the vibration sensor may be disposed in the housing such that the third axis extends in a direction orthogonal to a direction of extension of the attachment device from the housing and orthogonal to a direction between the first and second surfaces.

The vibration monitor may comprise a data store, such as data memory comprised in the processor, which stores the first to third transformations. The vibration sensor may comprise a tri-axial vibration sensor. The vibration sensor may comprise an accelerometer. The processor may comprise a microcontroller.

Alternatively or in addition the processor may comprise electronic circuitry further to or instead of a microcontroller, the electronic circuitry being configured to perform processes described herein. The vibration monitor may therefore comprise circuits having structures and/or non-transitory memory having programmed instructions to perform these processes.

The vibration monitor may comprise an analogue to digital converter which is operative to sample an output for each of the first to third axes from the vibration sensor. The analogue to digital converter may be operative to sample an output from the vibration sensor at a rate of at least 1 kHz, 2 kHz, 4 kHz, 6 kHz or 8 kHz. The analogue to digital converter may be operative to sample an output from the vibration sensor at a rate of no more than 10 kHz.

The vibration monitor may comprise a display, such as an LCD display. The LCD display may be supported by the housing. The vibration monitor may be configured to display vibration exposure as determined by the vibration monitor.

Alternatively or in addition, the vibration monitor may comprise at least one of: an audible output device operable to provide an audible output, such as a buzzer; and an output device operable to provide an output susceptible to pallesthesia, such as a vibrating motor. The processor may operate such an output device in dependence on determined vibration exposure. For example, an output device may be operated when a predetermined vibration exposure limit is reached, such as a daily vibration exposure limit.

The vibration monitor may be configured for communication of data, such as vibration exposure data, from the vibration monitor. The data may be communicated wirelessly. More specifically, the vibration monitor may be received in a holder when not in use on an operator. The holder may be configured to receive plural vibration monitors, such as by way of plural profiles which are each shaped to receive a vibration monitor. The holder may be configured for communication of data and more specifically wireless communication of data between the holder and the vibration monitor. Vibration exposure data may thus be conveyed to the holder with the holder being configured to convey the received vibration exposure data to computing apparatus, which may be at a location remote from the holder. Vibration exposure data may be stored in the computing apparatus. The computing apparatus may provide for analysis of stored vibration exposure data.

According to a second aspect of the present invention there is provided a vibration monitoring arrangement comprising the vibration monitor according to the first aspect and the tool device. Embodiments of the second aspect of the present invention may comprise one or more features of the first aspect.

According to a third aspect of the present invention there is provided a method of monitoring vibration sustained by an operator during use of a power tool, the method comprising:

sensing vibration sustained by an arm or hand of the operator by way of a vibration sensor comprised in a vibration monitor when the vibration monitor is releasably attached to the arm or hand of the operator; providing from the vibration sensor: a first vibration signal corresponding to vibration in a first axis; a second vibration signal corresponding to vibration in a second axis; and a third vibration signal corresponding to vibration in a third axis, the first axis extending between the dorsal and palmar sides of the arm or hand, the second axis extending across the arm or hand in a direction of separation of fingers of the hand, and the third axis extending along the arm or hand; and

applying in a processor: a first transformation to the first vibration signal; a second transformation to the second vibration signal; and a third transformation to the third vibration signal; and

determining in the processor vibration exposure for the operator during use of the power tool, the vibration exposure being determined in dependence on the first, second and third vibration signals as transformed by the first, second and third transformations, each of the first to third transformations providing for: a rise to a peak between 8 Hz and 20 Hz as frequency increases; a fall to a trough beyond the peak with increasing frequency; and a rise from the trough with further increasing frequency, the third transformation providing for a rise from the trough at a higher frequency than at least one of the first and second transformations.

Embodiments of the third aspect of the present invention may comprise one or more features of the first aspect of the present invention.

According to a fourth aspect of the present invention, there is provided a vibration monitor which is configured to be releasably attached to an arm or hand of an operator during use of a power tool, the vibration monitor comprising:

a vibration sensor operative to sense vibration sustained by the arm or hand of the operator when the vibration monitor is attached to the arm or hand of the operator; and

a processor configured to receive sensed vibration data from the vibration sensor and to apply a transformation to the received vibration data in respect of at least one axis of vibration to provide transformed data,

wherein the transformation is adjusted in dependence on a magnitude of the sensed vibration.

Embodiments of the fourth aspect of the present invention may comprise one or more features of the first aspect of the present invention.

According to a fifth aspect of the present invention, there is provided a method of monitoring vibration sustained by an operator during use of a power tool, the method comprising:

sensing vibration sustained by an arm or hand of the operator by way of a vibration sensor comprised in a vibration monitor when the vibration monitor is releasably attached to the arm or hand of the operator; and

applying in a processor a transformation to sensed vibration data received from the vibration sensor to provide transformed data, the sensed vibration data being in respect of at least one axis of vibration, wherein the transformation is adjusted in dependence on a magnitude of the sensed vibration.

Embodiments of the fifth aspect of the present invention may comprise one or more features of the first aspect of the present invention.

In a more general sense, the invention provides in a further aspect a vibration monitor configured to be releasably attached to a limb of an operator during use of a power tool. The vibration monitor comprises: a vibration sensor operative to sense vibration sustained by the limb of the operator when the vibration monitor is attached to the limb of the operator and to provide: at least one of a first vibration signal and a second vibration signal, the first vibration signal corresponding to vibration in a first axis and the second vibration signal corresponding to vibration in a second axis; and a third vibration signal corresponding to vibration in a third axis. The first axis extends between first and second sides of the limb, the second axis extends between third and fourth sides of the limb, and the third axis extends along the limb. The vibration monitor also comprises a processor configured to receive the at least one of the first and second vibration signals and to receive the third vibration signal, to apply a first transformation to the first vibration signal to provide first transformed data where the first vibration signal is received, to apply a second transformation to the second vibration signal to provide second transformed data where the second vibration signal is received, and to apply a third transformation to the third vibration signal to provide third transformed data, the processor being further configured to determine vibration exposure for the operator during use of the power tool, the vibration exposure being determined in dependence on at least one of the first and second transformed data and on the third transformed data. Each of the first to third transformations provides for: a rise to a peak between 8 Hz and 20 Hz as frequency increases; a fall to a trough beyond the peak with increasing frequency; and a rise from the trough with further increasing frequency.

The peak of the third transformation may be higher than the peak of at least one of the first and second transformations. The peak of the third transformation being higher may be appropriate for a certain category of operator. For another certain category of operator, third transformation may in addition provide for a rise from the trough at a higher frequency than at least one of the first and second transformations. Further embodiments of the further aspect of the present invention may comprise one or more features of the first aspect of the present invention.

Furthermore, and in the more general sense mentioned above, in a yet further aspect there is provided a method of monitoring vibration sustained by an operator during use of a power tool. The method comprises: sensing vibration sustained by a limb of the operator by way of a vibration sensor comprised in a vibration monitor when the vibration monitor is attached to the limb of the operator; and providing from the vibration sensor: at least one of a first vibration signal and a second vibration signal, the first vibration signal corresponding to vibration in a first axis and the second vibration signal corresponding to vibration in a second axis; and a third vibration signal corresponding to vibration in a third axis. The first axis extends between first and second sides of the limb, the second axis extends between third and fourth sides of the limb, and the third axis extends along the limb. The method also comprises applying in a processor a first transformation to the first vibration signal to provide first transformed data where the where the first vibration signal is received in the processor, a second transformation to the second vibration signal to provide second transformed data where the second vibration signal is received in the processor, and a third transformation to the third vibration signal to provide third transformed data. The method further comprises determining in the processor vibration exposure for the operator during use of the power tool, the vibration exposure being determined in dependence on at least one of the first and second transformed data and on the third transformed data. Each of the first to third transformations provides for: a rise to a peak between 8 Hz and 20 Hz as frequency increases; a fall to a trough beyond the peak with increasing frequency; and a rise from the trough with further increasing frequency.

As discussed above in relation to the further aspect of the invention, the peak of the third transformation may be higher than the peak of at least one of the first and second transformations. Further embodiments of the yet further aspect of the present invention may comprise one or more features of the first aspect of the present invention.

Brief Description of Drawings

Further features and advantages of the present invention will become apparent from the following specific description, which is given by way of example only and with reference to the accompanying drawings, in which:

Figure 1 shows a vibration monitor according to an embodiment of the present invention in situ;
Figure 2 is a block diagram representation of the embodiment of Figure 1;
Figure 3 is a flow chart setting out the main steps during operation of the vibration monitor of Figure 1;
Figure 4 is a graphical representation of a first set of low frequency transformations and a first set of high frequency transformations used during operation of the vibration monitor of Figure 1; and
Figure 5 is a graphical representation of a second set of low frequency transformations and a second set of high frequency transformations used during operation of the vibration monitor of Figure 1.

Description of Embodiments

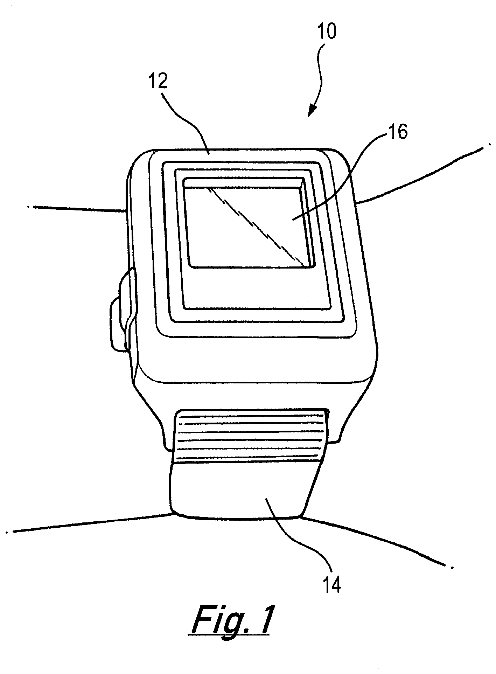

A vibration monitor 10 according to an embodiment of the present invention is shown in situ on the wrist of a power tool operator. The vibration monitor 10 comprises a housing 12 having the general form of rectangular cuboid and a strap 14 attached to the housing whereby the vibration monitor 10 may be attached to the wrist of the operator in the manner of a wristwatch. A face of the housing 12 defines a rectangular window 16 through which an LCD display may be seen by the operator. An embodiment of the vibration monitor 10 of Figure 1 comprises a user operable on-off switch whereby the vibration monitor may be turned off to stop recording vibration at inappropriate times, such as when the operator is driving.

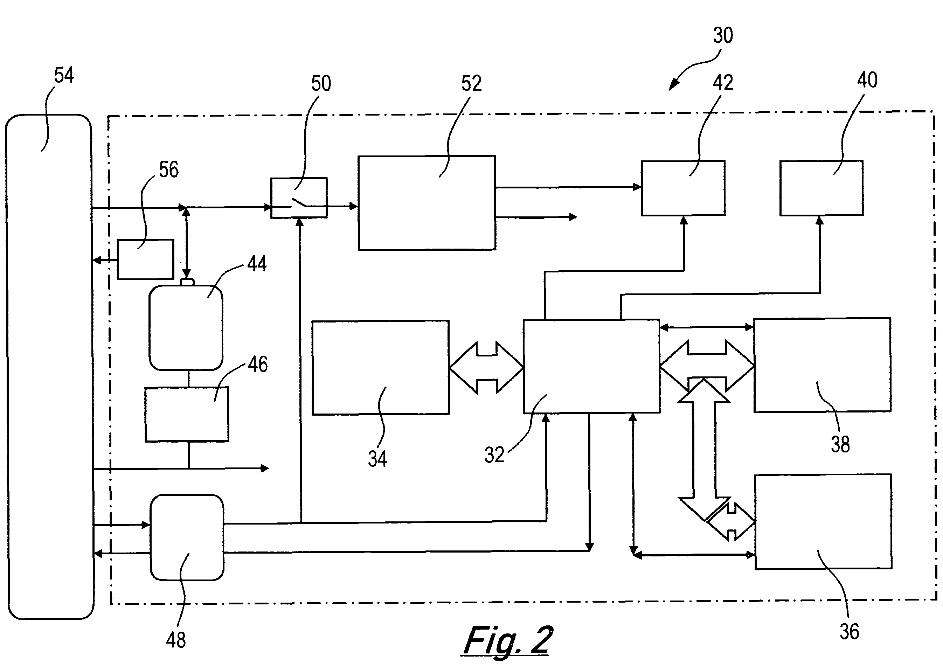

The vibration monitor 30 is represented in block diagram form in Figure 2. The vibration monitor 30 comprises a microcontroller 32, namely an Atmel ARM Cortex M4 SAM4LS with 512K of flash memory, an LCD 34, which is driven by the microcontroller 32 by way of a i2c bus, a tri-axial accelerometer 36 (which constitutes a vibration sensor), namely an ST Microelectronics MEMS LIS3DSHTR, and an RFID transceiver 38, namely an NXP 13.56MHz CLRC66301 HN/TR having multiple protocol support. Each of the accelerometer 36 and the RFID transceiver 38 communicates with the microcontroller 32 by way of an SPI bus. The accelerometer 36 comprises an analogue to digital converter. The design of the vibration monitor 30 in respect of the microcontroller 32, the LCD 34, the accelerometer 36 and the RFID transceiver 38 is within the ordinary design capabilities of the person skilled in the art. The vibration monitor 30 further comprises a buzzer 40 and a vibration motor 42 which are operative under control from the microcontroller 32 to provide a warning of different sensory forms when vibration exposure exceeds a predetermined level. The design of the vibration monitor 30 in respect of the buzzer 40 and the vibration motor 42 is within the ordinary design capabilities of the person skilled in the art.

The vibration monitor 30 yet further comprises a rechargeable battery 44, battery protection circuitry 46, galvanically isolated communications circuitry 48, an on-off switch 50, power supply circuitry 52 and a temperature sensor 56. The design of the vibration monitor 30 in respect of these components is within the ordinary design capabilities of the person skilled in the art. A docking station 54 is represented in Figure 2. The docking station 54 is configured to hold plural vibration monitors 30 in respective bays formed in the docking station 54. When received in the docking station 54 the rechargeable battery 44 of the vibration monitor 30 is charged by way of a copper connection between the docking station 54 and the vibration monitor 30. The communications circuitry 48 of the vibration monitor 30 provides for communication of data between the vibration monitor 30 and the docking station 54. Data communicated to the docking station 54 includes the like of vibration exposure data, operator exposure data and Power Spectral Density (PSD) data stored in the vibration monitor 30 during use thereof. Such data is stored for compliance and record keeping purposes and further analysis of power tool usage if such is required. Data communicated to the vibration monitor 30 from the docking station 54 includes the like of vibration exposure thresholds and other configuration data for the vibration monitor 30 and provides for clearing of data memory within the vibration monitor 30 such as data memory used to store vibration exposure data, operator exposure data and PSD data. The power supply circuitry 52 comprises a regulator and a DC/DC converter which are operative to draw current from the rechargeable battery 44 and provide electrical power of appropriate voltage to each of the buzzer 40 and the vibration motor 42. The on-off switch 50 enables the operator to turn the vibration monitor 30 on and off. The temperature sensor 56 is operative to sense the temperature of the rechargeable battery 44 during charging and to convey the sensed temperature to the docking station 54. Damage to the rechargeable battery 44 may occur if the temperature of the rechargeable battery 44 rises above a threshold temperature. The docking station 54 is therefore configured to cease charging of the rechargeable battery 44 if the sensed temperature rises above a threshold temperature.

A vibration monitoring arrangement according to an embodiment of the present invention comprises the vibration monitor 30 of Figures 1 and 2 and an RFID tag (not shown). Power tool data is stored in the RFID tag and the RFID tag is brought into use by being attached by way of adhesive to a power tool. The power tool data comprises an identification code for the power tool, tool type data, a noise rating for the power tool and a weight of the power tool. The tool type data identifies the power tool as either a low frequency tool or a high frequency tool. The noise rating provides for determination of exposure of the operator to noise based on length of time of use of the power tool. The weight of the power tool provides a basis for determining physical stress of the user on account of bearing the weight of the power tool during use. A vibration monitoring arrangement according to another embodiment of the present invention comprises the vibration monitor 30 of Figures 1 and 2 but lacks the RFID tag.

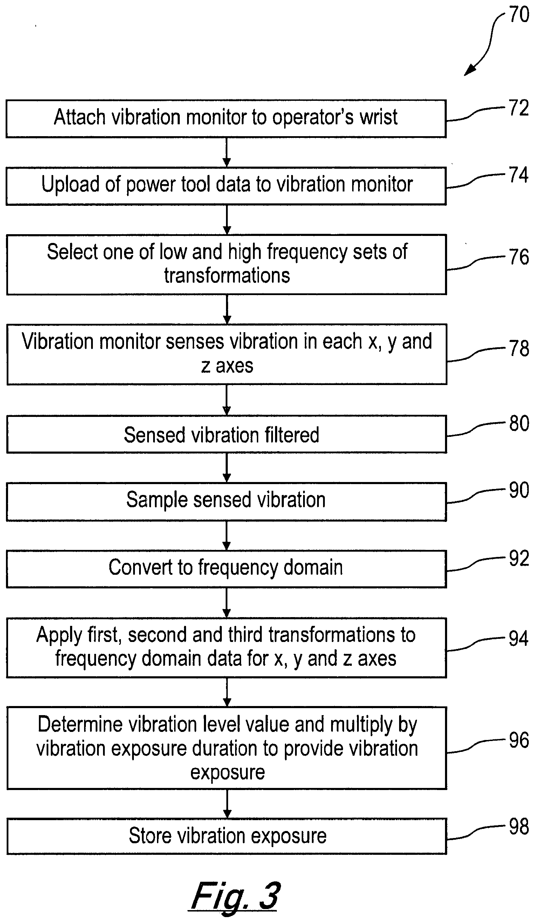

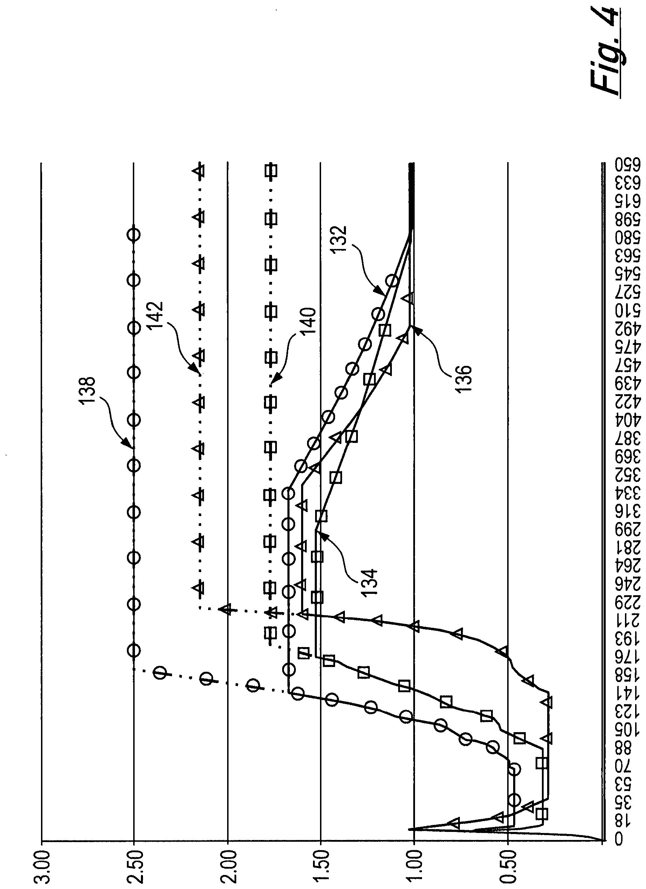

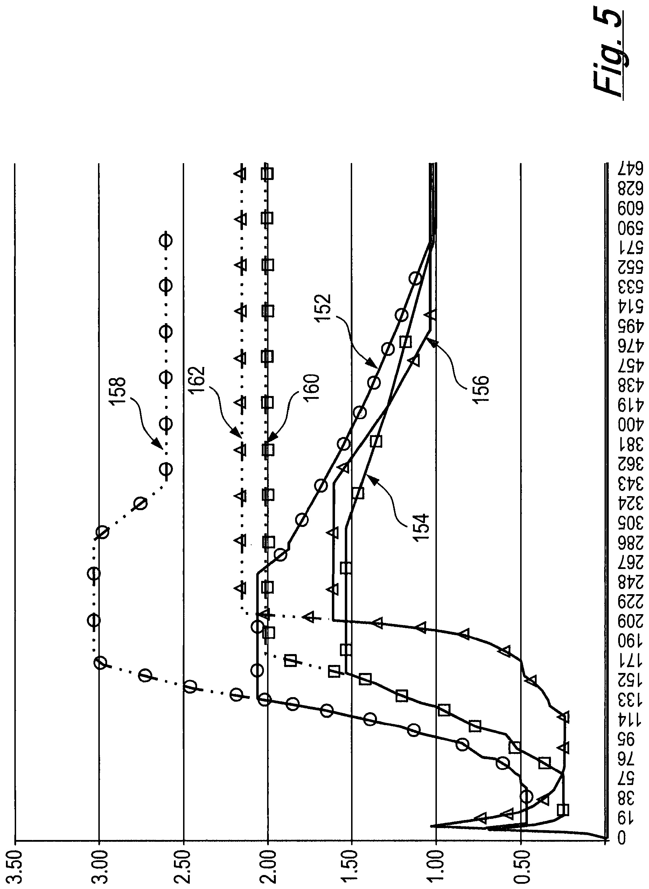

Operation of the vibration monitor 30 of Figure 2 will now be described with reference to the flow chart of Figure 3 and the charts shown in Figures 4 and 5.

The operator attaches the vibration monitor 30 to his wrist 72 and switches on the vibration monitor. When the operator takes hold of a power tool the RFID communication link between the vibration monitor 30 and the RFID tag on the tool is operative to provide for upload of the power tool data 74. In an alternative application, the operator works with a fixed power tool, such as a grinder, and holds a workpiece with which the power tool is brought into contact whereby vibration of the power tool is coupled to the operator by way of the workpiece. Power tool data is also uploaded to the vibration monitor according to this alterative application.

The tri-axial accelerometer 36 comprised in the vibration monitor is operative to sense vibration sustained by the operator during use of the power tool and to provide a vibration signal in each of mutually orthogonal x, y and z axes. The microcontroller 32 performs a peak height analysis of the frequency domain converted vibration signal in at least one of the x, y and z axes and between 120 Hz and 200 Hz. If the peak height is above a predetermined value, a high frequency set of first, second and third transformations is selected 76. Otherwise, a low frequency set of first, second and third transformations is selected 76. According to another approach, the tool type data uploaded from the RFID tag is used to select one of the low frequency set of transformations and the high frequency set of transformations. The high frequency set of first, second and third transformations and the low frequency set of first, second and third transformations are shown in each of Figures 4 and 5.

The tri-axial accelerometer 36 comprised in the vibration monitor continues to sense vibration sustained by the operator during use of the power tool and to provide a vibration signal in each of mutually orthogonal x, y and z axes 78. On account of the orientation of the vibration monitor on the operator's wrist, the x axis extends between the dorsal and palmar sides of the operator's arm or hand, the y axis extends across the operator's arm or hand in a direction of separation of fingers of the hand, and the y axis extends along the operator's arm or hand. Each vibration signal is sampled by the analogue to digital converter comprised in the microcontroller 32 every one second for 320 ms at a rate of 1.6 kHz. The sampled vibration data for the three axes is filtered with a high pass digital filter and a notch digital filter to remove vibration data from sources other than a power tool, e.g. vibration from the operator waving or sustained by the operator from the floor through his legs 80.

As mentioned above, the microcontroller 32 converts the sampled vibration data for the three axes to the frequency domain 92. Conversion to the frequency domain is by way of Welch's method with a large time window of, for example, 10 seconds to provide high frequency resolution. The frequency domain data of the x, y and z axes is transformed by applying the first, second and third transformations respectively of the selected one of the low frequency set of transformations and the high frequency set of transformations 94. Then the processor is operative to determine the root mean square value for each of the x, y and z axes in accordance with:

$$a_{hw} = \sqrt{\sum_i (W_{hi}a_{hi})^2}$$

where $a_{hw}$ is the root mean square acceleration for an axis, $W_{hi}$ is a weighting factor for the $i$ th one-third-octave band applied by way of a respective one of the first to third transformations and $a_{hi}$ is the acceleration for one of the first to third axes measured in the $i$ th one-third-octave band in metres per second squared. The processor then combines the root mean square acceleration vibration data for the three axes in accordance with:

$$a_{hv} = \sqrt{a_{hwx}^2 + a_{hwy}^2 + a_{hwz}^2}$$

where $a_{hv}$ is the combined value for the three axes and $a_{hwx}$, $a_{hwy}$ and $a_{hwz}$ are the root mean square values for the x, y and z axes respectively as determined in accordance with the equation above. The thus determined combined value is a vibration level value 96. In an alternative embodiment, and subject to there being sufficient processing capacity, the first to third transformations are applied in the time domain. Processing entirely in the time domain as an alternative to frequency domain processing is within the ordinary design capabilities of the person skilled in the art.

According to an alternative approach, the first to third transformations are combined to provide a combined transformation and the vibration data in the x, y and z axes is combined to provide combined vibration data. Then, the combined transformation is applied to the combined vibration data.

In a form of the invention, the first to third transformations or the combined transformation are adjusted to take account of change in transmissibility of the hand arm anatomy with vibration magnitude. According to a first approach in this form, the transformation is adjusted by moving the transformation in the frequency axis. According to a second approach in this form, all of the transformation is adjusted by changing all of the weighting factors described above. According to a third approach in this form, parts of the transformation in different frequency bands are adjusted differently by changing the weighting factors described above to different extents depending on the vibration magnitude in the different frequency bands. For example, a positive offset may be applied in one frequency band in which there is vibration of higher magnitude and a negative offset may be applied in another frequency band in which there is vibration of lower magnitude.

A vibration exposure is provided by multiplying the square of the vibration level value by the vibration exposure duration in accordance with $2 * T * V^2$, where T is the duration of exposure in hours and V is the vibration level value. The vibration exposure is stored 98 and added to vibration exposure determined previously during the operator's shift of work to provide accumulated vibration exposure. If the microcontroller 32 determines that the accumulated vibration exposure exceeds a vibration exposure threshold stored in the vibration monitor, the microcontroller 32 is operative to actuate the buzzer 40 and the vibration motor 42 to provide a warning to the operator. The microcontroller 32 is further operative to display the accumulated vibration exposure to the operator by way of the LCD display 34. The microcontroller 32 is further operative to display a time remaining for use of the power tool being used presently by the operator. The time remaining for use is the time left for use of the power tool before the like of a daily exposure limit is reached. The time remaining for use is calculated based on the accumulated vibration exposure and the vibration exposure calculated during use of the present power tool. The time remaining for use is decremented as more use is made of the present power tool. Further to the vibration exposure determination process described above, the microcontroller 32 is operative to determine a Power Spectral Density (PSD) from the sampled vibration data and to store the PSD in memory. The PSD is determined on the basis of frequency increments of 3.125 Hz between 3 Hz and 650 Hz. The energy received at the wrist of the operator on account of vibration is determined by integration of the PSD to thereby provide an energy value. The microcontroller 32 is further operative to determine an operator exposure value in dependence on the energy value.

At the end of the operator's shift, the operator removes the vibration monitor 30 from his wrist and places it in a bay in the docking station 54 whereupon recharging of the rechargeable battery comprised in the vibration monitor commences. In addition, the accumulated vibration exposure and the power spectral density data are wirelessly conveyed to the docking station 54 along with the operator exposure value. When stored in the docking station 54 the accumulated vibration exposure and the power spectral density data are available for subsequent review and analysis on the like of a Personal Computer which receives data stored by the presently described vibration monitor 30 and other vibration monitors of the same form and function by way of a communications port of known form and function comprised in the docking station 54.

Figure 4 shows two transformations for each of the x, y and z axes with frequency in Hz along the x axis and amplitude value along the y axis according to a first example. A low frequency set of transformations comprises a first transformation for the x axis 132, a second transformation for the y axis 134 and a third transformation for the z axis 136. A high frequency set of transformations comprises a first transformation for the x axis 138, a second transformation for the y axis 140 and a third transformation for the z axis 142. As described above, one of the low and high frequency sets of transformations is selected based on peak height analysis of at least one of the vibration signals for x, y and z axes or based on the tool type data. The selected first, second and third transformation are then applied to vibration data for the x, y and z axes respectively. As can be seen from Figure 4, the first to third transformations all rise to a peak between 8 and 20 Hz before falling to a trough. The third transformation exhibits a peak with slightly greater amplification than one. The first and second transformations exhibit a peak with attenuation substantially less than one. Furthermore, the third transformation rises from its trough at a frequency substantially higher than the frequency at which each of the first and second transformations rises from its trough. Further to this, each of the transformations has a flat-bottomed trough above the peak between 8 Hz and 20 Hz. The second peak of each of the low frequency transformations 132, 134, 136 is flat topped. Each of the high frequency transformations 138, 140, 142 reaches a maximum value beyond the trough and remains at the maximum value up to the maximum frequency.

Figure 5 shows two transformations for each of the x, y and z axes with frequency in Hz along the x axis and amplitude value along the y axis according to a second example. The low 152, 154, 156 and high 158, 160, 162 frequency transformations for the x, y and z axes are as described above with reference to Figure 4 with some of the differences in the form of the transformations of Figure 5 described below.

The flat-bottomed trough of each of the transformations in Figure 5 spans a shorter frequency range than the trough of the corresponding transformation in Figure 4. The maximum amplitude above the trough of each of the low and high frequency transformations for the x axis 152, 158 is higher than for the corresponding transformation of Figure 4. The maximum amplitude above the trough of the high frequency transformations for the y axis 160 is higher than for the corresponding transformation of Figure 4. The high frequency transformation for the x axis 158 has a flat-topped peak whereas the corresponding transformation reaches its maximum value beyond the trough and remains at the maximum value up to the maximum frequency.

Each of the first, second and third transformations is determined by measuring transmission of vibration between 3 Hz and 650 Hz from the point of contact with a tool or workpiece to the wrist where the vibration monitor is to be worn. Transmission of vibration is measured for an appropriate set of different tools or workpieces for a variety of operators to provide representative transmission data. In an alternative approach, transmission of vibration is measured for a particular operator to tailor the first to third transformations to the operator. In an alternative approach, a parameter of one or more of the first to third transformations is set in dependence on input of at least one of an anatomical parameter and a parameter concerning how the particular operator grips the power tool or workpiece. The anatomical parameter is based on at least one of body mass index or width of wrist of the operator. The parameter concerning how the particular operator grips the power tool or workpiece is determined by way of a grip strength test performed on the operator. In certain circumstances, this alternative approach is used to tailor transformations based on representative transmission data. The representative transmission data or the modified representative transmission data is then combined with the weighting specified in Table A.2, Annex A EN ISO 5349:2001 to provide each of the first to third transformations shown in Figure 4. According to another approach, the representative transmission data is combined with a different weighting appropriate for HAV exposure determination to provide first to third transformations of the form shown in Figure 4. The two sets of first to third transformations are stored in data memory comprised in the vibration monitor for use during operation of the vibration monitor as described above with reference to Figure 3.

## Claims

1. A vibration monitor (10, 30) which is configured to be releasably attached to an arm or hand of an operator during use of a power tool, the vibration monitor comprising:

   a vibration sensor (36) operative to sense vibration sustained by the arm or hand of the operator when the vibration monitor is attached to the arm or hand of the operator and to provide: a first vibration signal corresponding to vibration in a first axis; a second vibration signal corresponding to vibration in a second axis; and a third vibration signal corresponding to vibration in a third axis (78), the first axis extending between the dorsal and palmar sides of the arm or hand, the second axis extending across the arm or hand in a direction of separation of fingers of the hand, and the third axis extending along the arm or hand; and

a processor (32) configured to receive the first, second and third vibration signals, to apply a first transformation (132, 138, 152, 158) to the first vibration signal, to apply a second transformation (134, 140, 154, 160) to the second vibration signal, and to apply a third transformation (136, 142, 156, 162) to the third vibration signal (94),

the processor (32) being further configured to determine vibration exposure for the operator during use of the power tool (96), the vibration exposure being determined in dependence on the first, second and third vibration signals as transformed by the first, second and third transformations,

each of the first to third transformations (132, 134, 136, 138, 140, 142, 152, 154, 156, 158, 160, 162) providing for: a rise to a peak between 8 Hz and 20 Hz as frequency increases; a fall to a trough beyond the peak with increasing frequency; and a rise from the trough with further increasing frequency, the third transformation (136, 142, 156, 162) providing for a rise from the trough at a higher frequency than at least one of the first and second transformations (132, 134, 138, 140, 152, 154, 158, 160).

2. The vibration monitor according to claim 1, wherein the third transformation (136, 142, 156, 162) provides for the rise from the trough at a frequency higher by at least 20 Hz than the rise from the trough for at least one of the first and second transformations (132, 134, 138, 140, 152, 154, 158, 160).

3. The vibration monitor according to claim 1 or 2, wherein the first transformation (132, 138, 152, 158) is applied to the first vibration signal to provide first transformed data, the second transformation (134, 140, 154, 160) is applied to the second vibration signal to provide second transformed data and the third transformation (136, 142, 156, 162) is applied to the third vibration signal to provide third transformed data, the first to third transformed data being combined to determine vibration exposure.

4. The vibration monitor according to claim 1 or 2, wherein the first to third transformations (132, 134, 136, 138, 140, 142, 152, 154, 156, 158, 160, 162) are combined to provide a combined transformation and the first to third vibration signals are combined to provide a combined vibration signal, the combined transformation being applied to the combined vibration signal to provide combined transformed data, vibration exposure being determined in dependence on the combined transformed data.

5. The vibration monitor according to any one of the preceding claims, wherein at least one of the first and second transformations (152, 154, 158, 160) provides for the rise from the trough with further increasing frequency starting below a frequency of 50 Hz.

6. The vibration monitor according to any one of the preceding claims, wherein at least one of the first and second transformations (132, 134, 138, 140, 152, 154, 158, 160) provides for reaching the trough below 30 Hz and the third transformation (136, 142, 156, 162) provides for reaching the trough between 30 Hz and 100 Hz.

7. The vibration monitor according to any one of the preceding claims, wherein each of the first to third transformations (132, 134, 136, 138, 140, 142, 152, 154, 156, 158, 160, 162) transition from maximum attenuation to reducing attenuation with increasing frequency and at a frequency below 150 Hz, the transition from increasing attenuation to reducing attenuation defining part of the trough in each of the first to third transformations.

8. The vibration monitor according to any one of the preceding claims, wherein the trough in the first transformation (132, 138, 152, 158) is less deep than the trough in each of the second (134, 140, 154, 160) and third transformations (136, 142, 156, 162) and the trough in the third transformation is deeper than the trough in the second transformation.

9. The vibration monitor according to any one of the preceding claims, wherein the trough provided by the first transformation (132, 138, 152, 158) is of maximum attenuation level below 50 Hz, an attenuation factor in a band of maximum attenuation being between 0.3 and 0.5.

10. The vibration monitor according to claim 9, wherein and with further increasing frequency, the first transformation (132, 138, 152, 158) provides for reducing attenuation before changing from providing reducing attenuation to providing increasing amplification at a frequency below 120 Hz.

11. The vibration monitor according to any one of the preceding claims, wherein each of the first to third transformations (132, 134, 136, 152, 154, 156, 158) reach maximum amplification with increasing frequency between 120 Hz and 300 Hz, the reached maximum amplification having the form of a second peak.

12. The vibration monitor according to any one of the preceding claims, wherein the peaks of the first and second transformations (132, 134, 138, 140, 152, 154, 158, 160) between 8 Hz and 20 Hz are at substantially the same frequency, the peak of the third transformation (136, 142, 156, 162) between 8 Hz and 20 Hz being between 1 Hz and 5 Hz higher than the peaks of the first and second transformations.

13. The vibration monitor according to any one of the preceding claims, wherein a height of the peak for at least one of the first and second transformations (132, 134, 138, 140, 152, 154, 158, 160) between 8 Hz and 20 Hz is up to 30% lower than a height of the peak for the third transformation (136, 142, 156, 162) between 8 Hz and 20 Hz.

14. The vibration monitor according to any one of the preceding claims, wherein the peak value for the third transformation (136, 142, 156, 162) is more than one to thereby provide for amplification, and the peak value for each of the first and second transformations (132, 134, 138, 140, 152, 154, 158, 160) is less than one to thereby provide for attenuation.

15. A method of monitoring vibration sustained by an operator during use of a power tool, the method comprising:

sensing vibration sustained by an arm or hand of the operator by way of a vibration sensor (36) comprised in a vibration monitor (10, 30) when the vibration monitor is releasably attached to the arm or hand of the operator (78);
providing from the vibration sensor (36): a first vibration signal corresponding to vibration in a first axis; a second vibration signal corresponding to vibration in a second axis; and a third vibration signal corresponding to vibration in a third axis, the first axis extending between the dorsal and palmar sides of the arm or hand, the second axis extending across the arm or hand in a direction of separation of fingers of the hand, and the third axis extending along the arm or hand; and
applying in a processor (32): a first transformation (132, 138, 152, 158) to the first vibration signal; a second transformation (134, 140, 154, 160) to the second vibration signal; and a third transformation (136, 142, 156, 162) to the third vibration signal (94); and
determining in the processor (32) vibration exposure for the operator during use of the power tool (96), the vibration exposure being determined in dependence on the first, second and third vibration signals as transformed by the first, second and third transformations,
each of the first to third transformations (132, 134, 136, 138, 140, 142, 152, 154, 156, 158, 160, 162) providing for: a rise to a peak between 8 Hz and 20 Hz as frequency increases; a fall to a trough beyond the peak with increasing frequency; and a rise from the trough with further increasing frequency, the third transformation (136, 142, 156, 162) providing for a rise from the trough at a higher frequency than at least one of the first and second transformations (132, 134, 138, 140, 152, 154, 158, 160).

**Patentansprüche**

1. Vibrationswächter (10, 30), der konfiguriert ist, um an einem Arm oder einer Hand eines Bedieners während der Verwendung eines angetriebenen Werkzeugs lösbar angebracht zu werden, wobei der Vibrationswächter Folgendes umfasst:

einen Vibrationssensor (36), der wirksam ist, um eine Vibration zu erfassen, die von dem Arm oder der Hand des Bedieners verspürt wird, wenn der Vibrationswächter an dem Arm oder der Hand des Bedieners angebracht ist, und um Folgendes bereitzustellen: ein erstes Vibrationssignal, das einer Vibration in einer ersten Achse entspricht; ein zweites Vibrationssignal, das einer Vibration in einer zweiten Achse entspricht; und ein drittes Vibrationssignal, das einer Vibration in einer dritten Achse entspricht (78), wobei sich die erste Achse zwischen der dorsalen und palmaren Seite des Arms oder der Hand erstreckt, wobei sich die zweite Achse über den Arm oder die Hand in einer Trennrichtung von Fingern der Hand erstreckt und wobei sich die dritte Achse entlang des Arms oder der Hand erstreckt; und
einen Prozessor (32), der konfiguriert ist, um das erste, zweite und dritte Vibrationssignal zu empfangen, um eine erste Transformation (132, 138, 152, 158) auf das erste Vibrationssignal anzuwenden, um eine zweite Transformation (134, 140, 154, 160) auf das zweite Vibrationssignal anzuwenden und um eine dritte Transformation (136, 142, 156, 162) auf das dritte Vibrationssignal anzuwenden (94),
wobei der Prozessor (32) ferner konfiguriert ist, um eine Vibrationsbelastung für den Bediener während der Verwendung des angetriebenen Werkzeugs zu bestimmen (96), wobei die Vibrationsbelastung in Abhängigkeit von dem ersten, zweiten und dritten Vibrationssignal, wie durch die erste, zweite und dritte Transformation transformiert, bestimmt wird,
wobei jede der ersten bis zur dritten Transformation (132, 134, 136, 138, 140, 142, 152, 154, 156, 158, 160, 162) Folgendes bereitstellt: einen Anstieg auf einen Höchstpunkt zwischen 8 Hz und 20 Hz, wenn die Frequenz steigt; einen Abfall auf einen Tiefstpunkt jenseits des Höchstpunktes mit steigender Frequenz; und einen Anstieg von dem Tiefstpunkt mit weiter steigender Frequenz, wobei die dritte Transformation (136, 142, 156, 162) einen Anstieg von dem Tiefstpunkt bei einer höheren Frequenz als mindestens eine der ersten und zweiten Transformation (132, 134, 138, 140, 152, 154, 158, 160) bereitstellt.

2. Vibrationswächter gemäß Anspruch 1, wobei die dritte Transformation (136, 142, 156, 162) den Anstieg von dem Tiefstpunkt bei einer Frequenz bereitstellt, die mindestens 20 Hz höher als der Anstieg von dem Tiefstpunkt für mindestens eine der ersten und zweiten Transformation (132, 134, 138, 140, 152, 154, 158, 160) ist.

3. Vibrationswächter gemäß Anspruch 1 oder 2, wobei die erste Transformation (132, 138, 152, 158) auf das erste Vibrationssignal angewendet wird, um erste transformierte Daten bereitzustellen, die zweite Transformation (134, 140, 154, 160) auf das zweite Vibrationssignal angewendet wird, um zweite transformierte Daten bereitzustellen, und die dritte Transformation (136, 142, 156, 162) auf das dritte Vibrationssignal angewendet wird, um dritte transformierte Daten bereitzustellen, wobei die ersten bis dritten transformierten Daten vereint werden, um eine Vibrationsbelastung zu bestimmen.

4. Vibrationswächter gemäß Anspruch 1 oder 2, wobei die erste bis dritte Transformation (132, 134, 136, 138, 140, 142, 152, 154, 156, 158, 160, 162) vereint werden, um eine vereinte Transformation bereitzustellen, und das erste bis dritte Vibrationssignal vereint werden, um ein vereintes Vibrationssignal bereitzustellen, wobei die vereinte Transformation auf das vereinte Vibrationssignal angewendet wird, um vereinte transformierte Daten bereitzustellen, wobei die Vibrationsbelastung in Abhängigkeit von den vereinten transformierten Daten bestimmt wird.

5. Vibrationswächter gemäß einem der vorhergehenden Ansprüche, wobei mindestens eine der ersten und zweiten Transformation (152, 154, 158, 160) den Anstieg von dem Tiefstpunkt mit weiter steigender Frequenz, beginnend unter einer Frequenz von 50 Hz, bereitstellt.

6. Vibrationswächter gemäß einem der vorhergehenden Ansprüche, wobei mindestens eine der ersten und zweiten Transformation (132, 134, 138, 140, 152, 154, 158, 160) das Erreichen des Tiefstpunktes unter 30 Hz bereitstellt und die dritte Transformation (136, 142, 156, 162) das Erreichen des Tiefstpunktes zwischen 30 Hz und 100 Hz bereitstellt.

7. Vibrationswächter gemäß einem der vorhergehenden Ansprüche, wobei jede der ersten bis dritten Transformation (132, 134, 136, 138, 140, 142, 152, 154, 156, 158, 160, 162) von maximaler Dämpfung auf reduzierende Dämpfung mit steigender Frequenz und bei einer Frequenz unter 150 Hz übergeht, wobei der Übergang von steigender Dämpfung auf reduzierende Dämpfung einen Teil des Tiefstpunktes in jeder der ersten bis dritten Transformation definiert.

8. Vibrationswächter gemäß einem der vorhergehenden Ansprüche, wobei der Tiefstpunkt in der ersten Transformation (132, 138, 152, 158) weniger tief als der Tiefstpunkt in jeder der zweiten (134, 140, 154, 160) und dritten Transformation (136, 142, 156, 162) ist und der Tiefstpunkt in der dritten Transformation tiefer als der Tiefstpunkt in der zweiten Transformation ist.

9. Vibrationswächter gemäß einem der vorhergehenden Ansprüche, wobei der durch die erste Transformation (132, 138, 152, 158) bereitgestellte Tiefstpunkt einem maximalen Dämpfungspegel unter 50 Hz entspricht, ein Dämpfungsfaktor in einem Band maximaler Dämpfung zwischen 0,3 und 0,5 liegt.

10. Vibrationswächter gemäß Anspruch 9, wobei mit weiter steigender Frequenz die erste Transformation (132, 138, 152, 158) eine reduzierende Dämpfung bereitstellt, vor dem Ändern von einem Bereitstellen reduzierender Dämpfung auf ein Bereitstellen steigender Verstärkung bei einer Frequenz unter 120 Hz.

11. Vibrationswächter gemäß einem der vorhergehenden Ansprüche, wobei jede der ersten bis dritten Transformation (132, 134, 136, 152, 154, 156, 158) eine maximale Verstärkung mit steigender Frequenz zwischen 120 Hz und 300 Hz erreicht, wobei die erreichte maximale Verstärkung die Form eines zweiten Höchstpunktes aufweist.

12. Vibrationswächter gemäß einem der vorhergehenden Ansprüche, wobei die Höchstpunkte der ersten und zweiten Transformation (132, 134, 138, 140, 152, 154, 158, 160) zwischen 8 Hz und 20 Hz im Wesentlichen bei der gleichen Frequenz liegen, der Höchstpunkt der dritten Transformation (136, 142, 156, 162) zwischen 8 Hz und 20 Hz zwischen 1 Hz und 5 Hz höher als die Höchstpunkte der ersten und zweiten Transformation liegt.

13. Vibrationswächter gemäß einem der vorhergehenden Ansprüche, wobei eine Höhe des Höchstpunktes für mindestens eine der ersten und zweiten Transformation (132, 134, 138, 140, 152, 154, 158, 160) zwischen 8 Hz und 20 Hz bis 30 % niedriger als eine Höhe des Höchstpunktes der dritten Transformation (136, 142, 156, 162) zwischen 8 Hz und 20 Hz ist.

**14.** Vibrationswächter gemäß einem der vorhergehenden Ansprüche, wobei der Höchstpunktwert für die dritte Transformation (136, 142, 156, 162) mehr als eins ist, um dadurch eine Verstärkung bereitzustellen, und der Höchstpunktwert für die erste und zweite Transformation (132, 134, 138, 140, 152, 154, 158, 160) weniger als eins ist, um dadurch eine Dämpfung bereitzustellen.

**15.** Verfahren zum Überwachen einer Vibration, die von einem Bediener während der Verwendung eines angetriebenen Werkzeugs verspürt wird, wobei das Verfahren Folgendes umfasst:

Erfassen einer Vibration, die von einem Arm oder einer Hand des Bedieners verspürt wird, mittels eines Vibrationssensors (36), der in einem Vibrationswächter (10, 30) umfasst ist, wenn der Vibrationswächter an dem Arm oder der Hand des Bedieners lösbar angebracht ist (78);

Bereitstellen von dem Vibrationssensor (36): eines ersten Vibrationssignals, das einer Vibration in einer ersten Achse entspricht; eines zweiten Vibrationssignals, das einer Vibration in einer zweiten Achse entspricht; und eines dritten Vibrationssignals, das einer Vibration in einer dritten Achse entspricht, wobei sich die erste Achse zwischen der dorsalen und palmaren Seite des Arms oder der Hand erstreckt, wobei sich die zweite Achse über den Arm oder die Hand in einer Trennrichtung von Fingern der Hand erstreckt und wobei sich die dritte Achse entlang des Arms oder der Hand erstreckt; und

Anwenden in einem Prozessor (32): einer ersten Transformation (132, 138, 152, 158) auf das erste Vibrationssignal; einer zweiten Transformation (134, 140, 154, 160) auf das zweite Vibrationssignal; und einer dritten Transformation (136, 142, 156, 162) auf das dritte Vibrationssignal (94); und

Bestimmen in dem Prozessor (32) einer Vibrationsbelastung für den Bediener während der Verwendung des angetriebenen Werkzeugs (96), wobei die Vibrationsbelastung in Abhängigkeit von dem ersten, zweiten und dritten Vibrationssignal, wie durch die erste, zweite und dritte Transformation transformiert, bestimmt wird,

wobei jede der ersten bis zur dritten Transformation (132, 134, 136, 138, 140, 142, 152, 154, 156, 158, 160, 162) Folgendes bereitstellt: einen Anstieg auf einen Höchstpunkt zwischen 8 Hz und 20 Hz, wenn die Frequenz steigt; einen Abfall auf einen Tiefstpunkt jenseits des Höchstpunktes mit steigender Frequenz; und einen Anstieg von dem Tiefstpunkt mit weiter steigender Frequenz, wobei die dritte Transformation (136, 142, 156, 162) einen Anstieg von dem Tiefstpunkt bei einer höheren Frequenz als mindestens eine der ersten und zweiten Transformation (132, 134, 138, 140, 152, 154, 158, 160) bereitstellt.

**Revendications**

**1.** Un dispositif de surveillance de vibrations (10, 30) qui est configuré de façon à être rattaché de manière libérable à un bras ou une main d'un opérateur au cours de l'utilisation d'un outil électrique, le dispositif de surveillance de vibrations comprenant :

un capteur de vibrations (36) conçu de façon à détecter des vibrations subies par le bras ou la main de l'opérateur lorsque le dispositif de surveillance de vibrations est rattaché au bras ou la main de l'opérateur et de façon à fournir : un premier signal de vibration correspondant à des vibrations dans un premier axe, un deuxième signal de vibration correspondant à des vibrations dans un deuxième axe et un troisième signal de vibration correspondant à des vibrations dans un troisième axe (78), le premier axe s'étendant entre les côtés dorsal et palmaire du bras ou de la main, le deuxième axe s'étendant au travers du bras ou de la main dans une direction de séparation des doigts de la main, et le troisième axe s'étendant le long du bras ou de la main, et

un processeur (32) configuré de façon à recevoir les premier, deuxième et troisième signaux de vibration, à appliquer une première transformation (132, 138, 152, 158) au premier signal de vibration, à appliquer une deuxième transformation (134, 140, 154, 160) au deuxième signal de vibration et à appliquer une troisième transformation (136, 142, 156, 162) au troisième signal de vibration (94),

le processeur (32) étant configuré en outre de façon à déterminer une exposition à des vibrations pour l'opérateur au cours de l'utilisation de l'outil électrique (96), l'exposition à des vibrations étant déterminée en fonction des premier, deuxième et troisième signaux de vibration tels que transformés par les première, deuxième et troisième transformations,

chaque transformation de la première à la troisième transformation (132, 134, 136, 138, 140, 142, 152, 154, 156, 158, 160, 162) assurant : une montée vers un pic entre 8 Hz et 20 Hz à mesure que la fréquence augmente, une chute vers un creux au-delà du pic avec une fréquence croissante et une montée à partir du creux avec une fréquence encore croissante, la troisième transformation (136, 142, 156, 162) assurant une montée à partir du creux à une fréquence plus élevée qu'au moins une transformation parmi les première et deuxième transformations (132, 134, 138, 140, 152, 154, 158, 160).

2. Le dispositif de surveillance de vibrations selon la Revendication 1, où la troisième transformation (136, 142, 156, 162) assure la montée à partir du creux à une fréquence plus élevée d'au moins 20 Hz que la montée à partir du creux pour au moins une transformation parmi les première et deuxième transformations (132, 134, 138, 140, 152, 154, 158, 160).

3. Le dispositif de surveillance de vibrations selon la Revendication 1 ou 2, où la première transformation (132, 138, 152, 158) est appliquée au premier signal de vibration de façon à fournir des premières données transformées, la deuxième transformation (134, 140, 154, 160) est appliquée au deuxième signal de vibration de façon à fournir des deuxièmes données transformées et la troisième transformation (136, 142, 156, 162) est appliquée au troisième signal de vibration de façon à fournir des troisièmes données transformées, les premières aux troisièmes données transformées étant combinées de façon à déterminer une exposition à des vibrations.

4. Le dispositif de surveillance de vibrations selon la Revendication 1 ou 2, où les première à la troisième transformations (132, 134, 136, 138, 140, 142, 152, 154, 156, 158, 160, 162) sont combinées de façon à fournir une transformation combinée et les premier au troisième signaux de vibration sont combinés de façon à fournir un signal de vibration combiné, la transformation combinée étant appliquée au signal de vibration combiné de façon à fournir des données transformées combinées, l'exposition à des vibrations étant déterminée en fonction des données transformées combinées.

5. Le dispositif de surveillance de vibrations selon l'une quelconque des Revendications précédentes, où au moins une transformation parmi les première et deuxième transformations (152, 154, 158, 160) assure la montée à partir du creux avec une fréquence encore croissante débutant sous une fréquence de 50 Hz.

6. Le dispositif de surveillance de vibrations selon l'une quelconque des Revendications précédentes, où au moins une transformation parmi les première et deuxième transformations (132, 134, 138, 140, 152, 154, 158, 160) assure l'atteinte du creux sous 30 Hz et la troisième transformation (136, 142, 156, 162) assure l'atteinte du creux entre 30 Hz et 100 Hz.

7. Le dispositif de surveillance de vibrations selon l'une quelconque des Revendications précédentes, où chaque transformation parmi les première à la troisième transformations (132, 134, 136, 138, 140, 142, 152, 154, 156, 158, 160, 162) passe d'une atténuation maximale à une atténuation décroissante avec une fréquence croissante et à une fréquence sous 150 Hz, la transition d'une atténuation croissante vers une atténuation décroissante définissant une partie du creux dans chaque transformation parmi les première à la troisième transformations.

8. Le dispositif de surveillance de vibrations selon l'une quelconque des Revendications précédentes, où le creux dans la première transformation (132, 138, 152, 158) est moins profond que le creux dans chaque transformation parmi les deuxième (134, 140, 154, 160) et troisième transformations (136, 142, 156, 162) et le creux dans la troisième transformation est plus profond que le creux dans la deuxième transformation.

9. Le dispositif de surveillance de vibrations selon l'une quelconque des Revendications précédentes, où le creux fourni par la première transformation (132, 138, 152, 158) est d'un niveau d'atténuation maximale sous 50 Hz, un facteur d'atténuation dans une bande d'atténuation maximale étant entre 0,3 et 0,5.

10. Le dispositif de surveillance de vibrations selon la Revendication 9, où et avec une fréquence encore croissante, la première transformation (132, 138, 152, 158) assure une atténuation décroissante avant de passer de la fourniture d'une atténuation décroissante à la fourniture d'une amplification croissante à une fréquence sous 120 Hz.

11. Le dispositif de surveillance de vibrations selon l'une quelconque des Revendications précédentes, où chaque transformation parmi les première à la troisième transformations (132, 134, 136, 152, 154, 156, 158) atteint une amplification maximale avec une fréquence croissante entre 120 Hz et 300 Hz, l'amplification maximale atteinte présentant la forme d'un deuxième pic.

12. Le dispositif de surveillance de vibrations selon l'une quelconque des Revendications précédentes, où les pics des première et deuxième transformations (132, 134, 138, 140, 152, 154, 158, 160) entre 8 Hz et 20 Hz sont à sensiblement la même fréquence, le pic de la troisième transformation (136, 142, 156, 162) entre 8 Hz et 20 Hz étant entre 1 Hz et 5 Hz plus élevé que les pics des première et deuxième transformations.

13. Le dispositif de surveillance de vibrations selon l'une quelconque des Revendications précédentes, où une hauteur du pic pour au moins une transformation parmi les première et deuxième transformations (132, 134, 138, 140, 152, 154, 158, 160) entre 8 Hz et 20 Hz est jusqu'à 30% inférieure à une hauteur du pic pour la troisième transformation (136, 142, 156, 162) entre 8 Hz et 20 Hz.

**14.** Le dispositif de surveillance de vibrations selon l'une quelconque des Revendications précédentes, où la valeur de pic pour la troisième transformation (136, 142, 156, 162) est supérieure à un de façon à ainsi assurer une amplification, et la valeur de pic pour chaque transformation parmi les première et deuxième transformations (132, 134, 138, 140, 152, 154, 158, 160) est inférieure à un de façon à ainsi assurer une atténuation.

**15.** Un procédé de surveillance de vibrations subies par un opérateur au cours de l'utilisation d'un outil électrique, le procédé comprenant :

la détection de vibrations subies par un bras ou une main de l'opérateur au moyen d'un capteur de vibrations (36) compris dans un dispositif de surveillance de vibrations (10, 30) lorsque le dispositif de surveillance de vibrations est rattaché de manière libérable au bras ou la main de l'opérateur (78),

la fourniture à partir du capteur de vibrations (36) de : un premier signal de vibration correspondant à des vibrations dans un premier axe, un deuxième signal de vibration correspondant à des vibrations dans un deuxième axe et un troisième signal de vibration correspondant à des vibrations dans un troisième axe, le premier axe s'étendant entre les côtés dorsal et palmaire du bras ou de la main, le deuxième axe s'étendant au travers du bras ou de la main dans une direction de séparation des doigts de la main, et le troisième axe s'étendant le long du bras ou de la main, et

l'application dans un processeur (32) de : une première transformation (132, 138, 152, 158) au premier signal de vibration, une deuxième transformation (134, 140, 154, 160) au deuxième signal de vibration et une troisième transformation (136, 142, 156, 162) au troisième signal de vibration (94), et

la détermination dans le processeur (32) d'une exposition à des vibrations pour l'opérateur au cours de l'utilisation de l'outil électrique (96), l'exposition à des vibrations étant déterminée en fonction des premier, deuxième et troisième signaux de vibration tels que transformés par les première, deuxième et troisième transformations,

chaque transformation parmi les première à la troisième transformations (132, 134, 136, 138, 140, 142, 152, 154, 156, 158, 160, 162) assurant : une montée vers un pic entre 8 Hz et 20 Hz à mesure que la fréquence augmente, une chute vers un creux au-delà du pic avec une fréquence croissante et une montée à partir du creux avec une fréquence encore croissante, la troisième transformation (136, 142, 156, 162) assurant une montée à partir du creux à une fréquence plus élevée qu'au moins une transformation parmi les première et deuxième transformations (132, 134, 138, 140, 152, 154, 158, 160).

10

12

16

14

*Fig. 1*

*Fig. 2*

70

```
┌─────────────────────────────────────────────┐
│ Attach vibration monitor to operator's wrist │──── 72
└─────────────────────────────────────────────┘
                      │
                      ▼
┌─────────────────────────────────────────────┐
│ Upload of power tool data to vibration monitor │──── 74
└─────────────────────────────────────────────┘
                      │
                      ▼
┌─────────────────────────────────────────────┐
│ Select one of low and high frequency sets of │──── 76
│                transformations               │
└─────────────────────────────────────────────┘
                      │
                      ▼
┌─────────────────────────────────────────────┐
│ Vibration monitor senses vibration in each x, y and │──── 78
│                    z axes                    │
└─────────────────────────────────────────────┘
                      │
                      ▼
┌─────────────────────────────────────────────┐
│            Sensed vibration filtered         │──── 80
└─────────────────────────────────────────────┘
                      │
                      ▼
┌─────────────────────────────────────────────┐
│            Sample sensed vibration           │──── 90
└─────────────────────────────────────────────┘
                      │
                      ▼
┌─────────────────────────────────────────────┐
│           Convert to frequency domain        │──── 92
└─────────────────────────────────────────────┘
                      │
                      ▼
┌─────────────────────────────────────────────┐
│ Apply first, second and third transformations to │──── 94
│       frequency domain data for x, y and z axes   │
└─────────────────────────────────────────────┘
                      │
                      ▼
┌─────────────────────────────────────────────┐
│ Determine vibration level value and multiply by │──── 96
│ vibration exposure duration to provide vibration │
│                   exposure                   │
└─────────────────────────────────────────────┘
                      │
                      ▼
┌─────────────────────────────────────────────┐
│           Store vibration exposure           │──── 98
└─────────────────────────────────────────────┘
```

## *Fig. 3*

*Fig. 4*

EP 3 799 582 B1

Fig. 5

**EP 3 799 582 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2299168 A
- GB 2542027 A
- DE 102007010800 A1
- US 2014176422 A1